# FASCICULE DE BREVET EUROPEEN

(11) **EP 2 482 193 B1**
(45) Date de publication et mention de la délivrance du brevet: **16.05.2018**
(21) Numéro de dépôt: 12000254.8
(22) Date de dépôt: 17.01.2012
(51) Int. Cl.: G06F 11/36, B64F 5/60

(54) **Procédé d'optimisation dynamique d'une architecture d'outils de tests système**
Dynamisches Optimierungsverfahren einer Systemtestwerkzeugarchitektur
Method for dynamic optimisation of an architecture of system testing tools

(30) Priorité: 26.01.2011 FR 1100232
(43) Date de publication de la demande: 01.08.2012
(73) Titulaire: Airbus Helicopters, 13725 Marignane Cedex (FR); Université De Lille 1 - USTL, 59655 Villeneuve d'Ascq (FR); Université de Valenciennes et du Hainaut-Cambresis, 59313 Valenciennes Cedex 9 (FR)
(72) Inventeur: Rubio, Martial, 13012 Marseille (FR); Belanger, Nicolas, 13270 Fos sur Mer (FR); Dekeyser, Jean-Luc, 62840 Sailly sur le Lys (FR); Ben Atitallah, Rabie, 59300 Famars (FR)
(74) Mandataire: GPI & Associés

(56) Documents cités:
- AFONSO G ET AL: "An efficient design methodology for hybrid avionic test systems", EMERGING TECHNOLOGIES AND FACTORY AUTOMATION (ETFA), 2010 IEEE CONFERENCE ON, IEEE, PISCATAWAY, NJ, USA, 13 septembre 2010 (2010-09-13), pages 1-4, XP031937139, DOI: 10.1109/ETFA.2010.5641195 ISBN: 978-1-4244-6848-5
- SANA CHERIF ET AL: "Modeling Reconfigurable Systems-on-Chips with UML MARTE Profile: An Exploratory Analysis", 13TH EUROMICRO CONFERENCE ON DIGITAL SYSTEM DESIGN: ARCHITECTURES, METHODS AND TOOLS; 1-3 SEPT. 2010, LILLE, FRANCE, IEEE, US, 1 septembre 2010 (2010-09-01), pages 706-713, XP031784983, ISBN: 978-1-4244-7839-2
- PUKITE P R ET AL: "Expert system for redundancy and reconfiguration management", PROCEEDINGS OF THE NATIONAL AEROSPACE AND ELECTRONICS CONFERENCE. (NAECON). DAYTON, MAY 18 - 22, 1992; [PROCEEDINGS OF THE NATIONAL AEROSPACE AND ELECTRONICS CONFERENCE. (NAECON)], NEW YORK, IEEE, US, vol. CONF. 44, 18 mai 1992 (1992-05-18), pages 233-240, XP010064233, DOI: 10.1109/NAECON.1992.220615 ISBN: 978-0-7803-0652-3

## Description

La présente invention se rapporte au domaine technique général des outils de tests système dans le domaine de l'aéronautique. Ces tests système sont par exemple déployés sur des bancs de tests du genre bancs d'intégration de système, des bancs d'intégration de logiciel, des bancs d'études et de développement et des simulateurs servant aux qualifications d'équipements embarqués sur des aéronefs et notamment des hélicoptères.

La dénomination « bancs de test » recouvre un large domaine d'utilisations qui va du simulateur complet (aucun équipement n'est présent mais remplacé par son modèle : virtualisation), en passant par le banc de test unitaire où un seul équipement est testé (banc de test logiciel) jusqu'au banc d'intégration où les modèles sont remplacés au fur et à mesure de leur disponibilité par l'équipement réel correspondant. Tous ces types de bancs possèdent une ou plusieurs des fonctionnalités suivantes :
- Espionnage
- Perturbations
- Enregistrement
- Rejeu

Ces tests système sont en général mis en oeuvre avec des équipements connectés en réseau à l'aide de Bus de communication.

Il est préférable de pouvoir s'assurer que ces outils de tests système fonctionnent de manière optimale. Des superviseurs de système ont ainsi été développés. La publication AFONSO G ET AL: "An efficient design methodology for hybrid avionic test systems" décrit une architecture hybride composée d'un calculateur CPU et d'un circuit de calcul FGPA permettant la réalisation d'une suite régulière de tâches de test liées au fonctionnement d'un système avionique. La publication SANA CHERIF ET AL: "Modeling Reconfigurable Systems-on-Chips with UML MARTE Profile: An Exploratory Analysis", décrit qu'un circuit de calcul FGPA est reconfigurable, de manières partielle ou totale, statique ou dynamique, et de façon Interne c'est-à-dire que le FPGA se reconfigure lui-même, ou externe, c'est à dire venant d'une source externe au système. L'invention intervient dans un environnement d'un système avionique distribué synchrone, c'est-à-dire s'appuyant sur une base de temps commune distribuée sur l'ensemble des éléments d'un réseau.

Selon un exemple d'intervention, dans un cas périodique ou cyclique, une tâche temps réel est la liste des modèles à exécuter pour une période donnée. Lorsque l'on ajoute un modèle avionique supplémentaire à cette liste, la tâche déborde temporellement (temps d'exécution trop important) et demeure dans un état en cours d'exécution, alors qu'elle devrait être dans un état suspendu jusqu'à la prochaine occurrence du cycle. A titre d'exemple, une tâche périodique de 20 ms comporte plusieurs modèles ayant un temps global d'exécution de 19 ms. Lorsque l'on ajoute dans la liste un modèle prenant 2 ms, on obtient un temps d'exécution global supérieur au temps préalablement alloué pour cette tâche. On utilise pour cela le terme « deadline » ou «temps d'exécution maximal» imparti à une tâche.

Selon un autre exemple d'intervention, dans un cas apériodique ou asynchrone, un flot d'événements entraînant un traitement prioritaire de processus associés aux dits événements peut perturber l'exécution de tâches périodiques en cours d'exécution. Ainsi, l'exécution de la tâche mentionnée ci-dessus est interrompue par l'exécution d'un processus dont la priorité est plus grande et traitant l'arrivée d'événements successifs. Si la totalité du traitement de ces événements dépasse la ms dans le cycle courant de 20 ms, on se trouve dans une situation de dépassement.

Par ailleurs, l'instrumentation pour la mesure du temps d'exécution des modèles sur laquelle repose le fonctionnement des moyens mettant en oeuvre le procédé conforme à l'invention, peut également générer un niveau d'intrusion susceptible d'entraîner un débordement.

On connaît par exemple sur des architectures SMP (Symétrie Multi Processing) avec mémoire partagée, comme par exemple sur les architectures de PC multi coeurs, un superviseur servant à gérer par exemple les liaisons ou les attachements d'une unité de calcul à un coeur particulier. Un tel superviseur permet d'équilibrer la charge sur les différents calculateurs CPU en s'efforçant de respecter les contraintes de temps réel.

Sur les architectures AMP (Asymetric Multi Processing), les plus communément rencontrées dans le domaine du test aéronautique avec Bus numérique, des solutions automatisées de supervision existes. Ces solutions sont cependant lourdes à mettre en oeuvre et ne respectent pas les contraintes de temps réel.

On connaît également des systèmes fortement distribués comportant des calculateurs CPU et des circuits de calcul FPGA, pour lesquels plusieurs configurations d'architecture prédéfinies et figées sont opérationnelles en fonction de l'état d'un paramètre du système. Les contraintes de temps réel sont alors respectées.

De tels systèmes sont par exemple évoqués dans une publication faite dans le cadre de la conférence IEEE le 13 septembre 2010. Cette publication, « an efficient design methodology for hybrid avionic test system », évoque l'application de ces systèmes pour des tests de systèmes avioniques, notamment en améliorant les performances de calculs.

Une autre publication, « Modeling reconfigurable system-on-chips with UML Marte profile : an exploratory analysis », faite lors de la 13^{ème} conférence EUROMICRO en septembre 2010, traite des circuits de calcul FGPA, et plus particulièrement ceux sur base de systèmes sur puce. Cette publication évoque la capacité de tels calculateurs à être reconfigurables.

Les solutions connues ont cependant toutes un inconvénient dans la mesure où les capacités de calcul ne sont pas optimisées pour des systèmes temps réel distribués.

Différentes abréviations dont les définitions sont données ci-après, seront utilisées dans la présente. On pourra s'y reporter si nécessaire. Ainsi :
CPU : « Central Processing Unit » ou unité centrale de calcul dont le flux d'exécution est par nature séquentiel et non parallèle dans le cas d'un processeur mono coeur ou quelconque dans le cadre d'un processeur multi coeurs.
FPGA : ou « Field-Programmable Gate Array » : est par opposition au CPU, une unité de calcul dont les flux d'exécution peuvent être de façon naturelle parallélisés, appelé aussi dans la suite « circuit de calcul ».
BUS IP: un Bus est un élément du système permettant d'échanger des données entre deux unités de calcul et un « IP » ou (Intellectual Property) est la brique logicielle (software) résidente dans le FPGA permettant d'assurer la fonction.
RAM IP: une mémoire auxiliaire visible de n'importe quel élément du système avionique. Une brique logicielle (IP) est prévue à cette fin dans le FPGA.
DDS IP: "Data Distribution Service", un standard d'échange de données sur un réseau.
IO IP: des « entrées-sorties ». Comme évoqué précédemment les FPGA sont particulièrement adaptés pour le traitement des flux parallèles. Ces « IO » ou (entrées-sorties) peuvent être interfacées au niveau du FPGA mais le traitement induit par ces flux parallèles est facilement réalisé par les briques logicielles ou software (IP) associées.
Time IP: Une base de temps commune l'ensemble de l'architecture du système avionique dans la mesure où les systèmes de test doivent être synchrones. On peut envisager d'utiliser une « brique logicielle IP, référence de temps » résident dans le FPGA pour tout le système.
Bus ARINC 429: Protocole standard de communication par Bus numérique.
Modèle avionique: un ensemble de fonctions avioniques utilisées pour faire fonctionner et contrôler le fonctionnement d'un aéronef ou pour faciliter le pilotage d'un aéronef.

Le terme « IP » est largement utilisé dans le monde du FPGA et désigne donc la brique software qui est la véritable valeur ajoutée de cette unité de calcul un peu particulière. Pour le même environnement « hardware », on peut donc avoir des « IP » de qualité diverses et variées selon les fournisseurs.

Dans la suite, on utilise le terme « fonction avionique ». Il est évident que ce terme peut être remplacé par le terme « modèle avionique » dans le cadre de l'invention.

La présente invention vise à proposer un procédé de contrôle et de configuration permettant de s'affranchir des limitations mentionnées ci-dessus et d'optimiser l'architecture de système avionique durant l'exécution des traitements de fonctions tests.

L'objet de la présente invention vise donc à proposer un procédé de contrôle et de configuration permettant d'effectuer des reconfigurations dynamiques d'une architecture de système avionique.

Par reconfiguration on entend une minimisation du temps de passage d'une ancienne configuration vers une nouvelle configuration de l'architecture d'un système avionique

Un autre objet de l'invention vise à fournir un programme d'ordinateur dédié à des systèmes avioniques et permettant de mettre en oeuvre les étapes du procédé de contrôle et de configuration.

Les objets assignés à l'invention sont atteints à l'aide d'un procédé de contrôle d'une architecture d'un système avionique comportant au moins un calculateur CPU et au moins un circuit de calcul FPGA hébergeant des fonctions ou modèles avioniques et communiquant via au moins un Bus numérique, ledit procédé étant dédié à optimiser l'exécution des traitements de fonctions tests, notamment sur bancs de tests, en reconfigurant si nécessaire ladite architecture,
caractérisé en ce qu'il consiste :
- a) à utiliser un ensemble de règles d'exécution pour les processus exécutés sur le (les) circuit(s) de calcul FPGA et sur le(s) calculateur(s) CPU,
- b) à surveiller des paramètres pertinents sur l'état général du système avionique en fonction des règles d'exécution,
- c) à générer une alerte lorsqu'un paramètre n'est pas conforme aux règles d'exécution,
- d) à vérifier l'alerte générée,
- e) à valider ou invalider l'alerte ainsi générée et vérifiée,
- f) à reconfigurer de manière dynamique et automatique l'architecture du système avionique en cas de validation de l'alerte, ladite reconfiguration consistant à faire migrer au moins une fonction avionique d'un calculateur CPU ou circuits de calcul FPGA vers un autre calculateur CPU ou circuits de calcul FPGA,
- g) ou à revenir à l'étape a) en cas d'invalidation de l'alerte.

La technologie à base de circuits FPGA permet ainsi de réaliser de manière dynamique, c'est-à-dire au cours d'un processus d'exécution, un hébergement de modèles avioniques. Il devient possible d'atteindre des puissances de calcul nettement supérieures à celles de calculateurs CPU seuls, tout en garantissant un fonctionnement en temps réel des systèmes.

Un autre avantage obtenu par le procédé de contrôle et de configuration réalisant une architecture reconfigurable, est lié à une gestion aisée du parallélisme permettant de contrôler le temps d'exécution des tâches selon les besoins de l'application. Un modèle peut être exécuté de manière parallèle s'il est parfaitement autonome, c'est-à-dire s'il n'a aucune dépendance dans son flot d'exécution par rapport au reste du système. Paralléliser un modèle à exécution séquentielle consiste donc à isoler les branches autonomes qui peuvent s'exécuter concurremment sur des unités de calcul différentes.

Selon un exemple d'intervention, dans un cas périodique ou cyclique, une tâche temps réel est la liste des modèles à exécuter pour une période donnée. Lorsque l'on ajoute un modèle avionique supplémentaire à cette liste, la tâche déborde temporellement (temps d'exécution trop important) et demeure dans un état en cours d'exécution, alors qu'elle devrait être dans un état suspendu jusqu'à la prochaine occurrence du cycle.

Selon un autre exemple d'intervention, dans un cas apériodique ou asynchrone, un flot d'événements entraînant un traitement prioritaire de processus associés aux dits événements peut perturber l'exécution de tâches périodiques en cours d'exécution.

Le procédé de contrôle et de configuration permet ainsi de redistribuer dynamiquement des modèles avioniques entre des calculateurs CPU et de circuits de calcul FPGA de manière optimisée. La distribution dynamique du traitement inhérent à un « Test System », réalisée grâce au procédé de contrôle et de configuration sur une architecture hybride comportant des calculateurs CPU et des circuits de calcul FPGA (Software/Hardware) présente ainsi des performances remarquables.

Selon un exemple de mise en oeuvre, le procédé conforme à l'invention consiste à utiliser comme paramètre pertinent un paramètre de temps d'exécution des fonctions tests selon les règles d'exécution.

Selon un exemple de mise en oeuvre, le procédé conforme à l'invention consiste à détecter un débordement temporel du temps d'exécution et reconfigurer l'architecture pour rétablir un temps d'exécution conforme aux règles d'exécution.

Selon un exemple de mise en oeuvre, le procédé conforme à l'invention consiste à détecter de manière anticipée un débordement temporel du temps d'exécution et reconfigurer l'architecture de manière anticipée pour rétablir un temps d'exécution conforme aux règles d'exécution.

Selon un exemple de mise en oeuvre, le procédé conforme à l'invention consiste à suspendre la fonction avionique faisant l'objet d'une migration et à vérifier la disponibilité opérationnelle de la fonction avionique dans son nouveau calculateur CPU ou circuit de calcul FPGA avant de mettre en oeuvre l'architecture reconfigurée.

Selon un exemple de mise en oeuvre, le procédé conforme à l'invention est appliqué à une architecture de système avionique comportant deux calculateurs CPU et deux circuits de calcul FPGA.

Selon un exemple de mise en oeuvre, le procédé conforme à l'invention est exécuté grâce à un programme d'ordinateur de supervision chargé sur un calculateur CPU.

Selon un autre exemple de mise en oeuvre, le procédé conforme à l'invention est exécuté grâce à un programme d'ordinateur de supervision chargé sur plusieurs calculateurs CPU distincts.

Le procédé conforme à l'invention ne peut être déployée que sur les systèmes de test car ceux-ci n'ont pas de contraintes de certification aussi bien sur le software que sur le hardware. En revanche, l'exploitation des résultats de cette solution se rapportant au procédé selon l'invention pourrait être d'un grand secours pour l'architecture des prochains calculateurs embarqués et permettrait ainsi d'aboutir à un compromis optimal entre software et hardware.

L'invention et ses avantages apparaîtront avec plus de détails dans le cadre de la description qui suit avec un exemple de réalisation donné à titre illustratif et non limitatif, en référence aux figures annexées qui représentent :
- la figure 1, une illustration d'un exemple de réalisation d'un système de test mettant en oeuvre le procédé conforme à l'invention,
- la figure 2, une illustration d'un exemple de réalisation du système de test de la figure 1, après une reconfiguration dynamique selon le procédé conforme à l'invention,
- et la figure 3, une présentation d'un exemple d'algorithme de supervision exécuté dans le cadre de la mise en oeuvre le procédé conforme à l'invention.

Les éléments structurellement et fonctionnellement identiques, présents sur plusieurs figures distinctes, sont affectés d'une seule et même référence numérique ou alphanumérique.

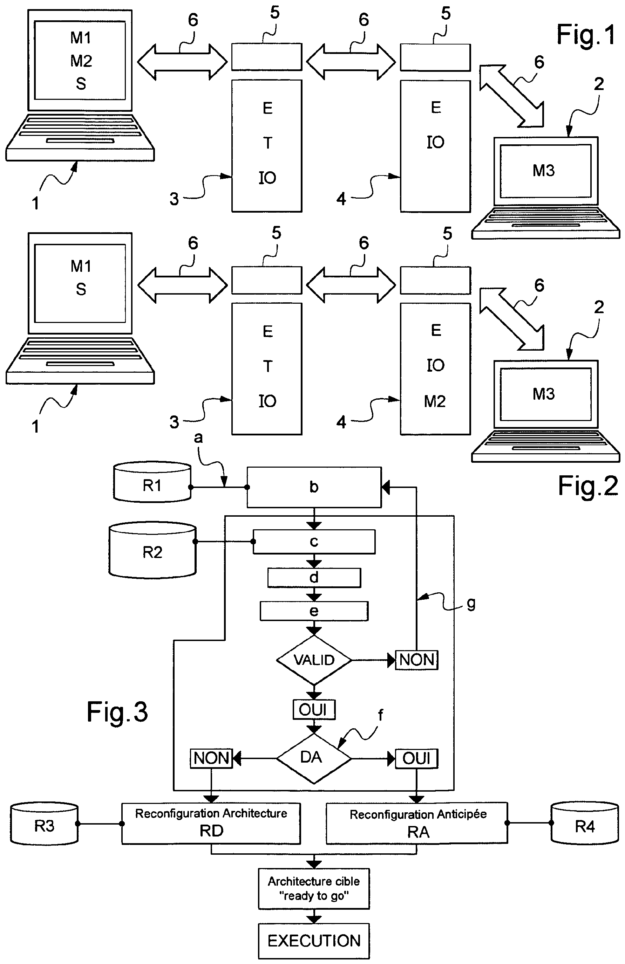

La figure 1 est une illustration d'un exemple de réalisation d'un système de test mettant en oeuvre le procédé conforme à l'invention. La figure 1 présente un état du système et la répartition des différents composants sur un exemple d'architecture dudit système. Une telle architecture est connue en tant que tel.

Le système comprend un premier calculateur CPU 1 hébergeant un modèle avionique M1, un modèle avionique M2 et les moyens pour mettre en oeuvre le procédé de contrôle et de configuration, appelés superviseur S dans la suite.

Le système comprend également un second calculateur CPU 2 hébergeant un modèle avionique M3.

Le système comprend également un premier circuit de calcul FPGA 3 et un second circuit de calcul FPGA 4, lesquels sont reliés, via des mémoires auxiliaires 5 appelées RAM, à un Bus numérique 6 basé sur le standard DDS.

Le premier circuit de calcul FPGA 3 héberge des éléments fondamentaux E nécessaires à la communication entre les différents constituants de l'architecture. Ces éléments fondamentaux E sont déjà connus.

Le premier circuit de calcul FPGA 3 héberge également une base de temps T commune pour l'ensemble de l'architecture, car le système est synchrone.

Le premier circuit de calcul FPGA 3 héberge également des moyens d'adressage IO des entrées et sorties du système.

Le second circuit de calcul FPGA 4 héberge les mêmes composants que le premier circuit de calcul FPGA 3, mis à part la base de temps T, laquelle est commune à l'ensemble de l'architecture.

La figure 2 est une illustration d'un exemple de réalisation du système de test de la figure 1, après une configuration dynamique effectuée selon le procédé conforme à l'invention.

L'architecture illustrée à la figure 2 se différentie de celle de la figure 1 par la migration du modèle avionique M2 vers le second circuit de calcul FPGA 4. Les autres composants de l'architecture demeurent à leur localisation respective initiale.

La figure 3 illustre un exemple d'algorithme de supervision exécuté dans le cadre de la mise en oeuvre le procédé de contrôle et de configuration conforme à l'invention.

Le procédé de contrôle consiste selon une étape a), à utiliser un ensemble de règles d'exécution R1 pour les processus exécutés sur le (les) circuit(s) de calcul FPGA 3 et 4 et sur le(s) calculateur(s) CPU 1 et 2.

Selon une étape b), le procédé consiste à surveiller des paramètres pertinents sur l'état général du système avionique en fonction des règles d'exécution précédentes. Certains paramètres peuvent être surveillés en temps réel et d'autres peuvent être construits de façon composite et faire l'objet de statistiques sur des périodes de temps.

Selon une étape c), le procédé consiste ensuite à générer une alerte lorsqu'un paramètre n'est pas conforme aux règles d'exécution. La génération de l'alerte se base sur une utilisation de règles prédéfinies R2 telles qu'un débordement temporel dans l'exécution de tâches. Un tel débordement peut être constaté soit en temps réel ou de manière anticipée.

Selon une étape d), le procédé consiste à vérifier l'alerte ainsi générée. Cette vérification consiste par exemple à analyser une nouvelle occurrence du paramètre en question.

Selon une étape e), le procédé consiste à valider ou invalider l'alerte ainsi générée et vérifiée. A cette fin, des règles d'investigation peuvent être utilisées, comme par exemple une analyse d'un paramètre composite construit pour ladite investigation, une analyse d'un paramètre non encore surveillé ou une analyse de valeurs statistiques.

Le procédé consiste également à analyser la place disponible sur le calculateur CPU 2 et sur les circuits de calcul FPGA 3 et 4 et à identifier le code pré synthétisé du second modèle avionique M2 pour le rendre éligible sur le second circuit de calcul FPGA 4 retenu.

Selon une étape f), le procédé consiste à reconfigurer de manière dynamique et automatique l'architecture du système avionique en cas de validation de l'alerte, ladite reconfiguration consistant à faire migrer le modèle avionique M2 du premier calculateur CPU 1 vers le second circuit de calcul FPGA 4.

Lors de cette étape f), le procédé consiste également à déterminer s'il s'agit d'un débordement anticipé DA ou non, afin de lancer soit une reconfiguration directe RD, soit une reconfiguration anticipée RA.

Lorsqu'il s'agit d'un débordement simple, c'est-à-dire non anticipé, on effectue une reconfiguration directe RD se basant sur des règles de reconfiguration directe R3.

Selon un exemple de mise en oeuvre, le procédé consiste donc à détecter de manière anticipée un débordement temporel anticipé DA du temps d'exécution et reconfigurer l'architecture de manière anticipée pour rétablir un temps d'exécution conforme aux règles d'exécution R1. Une telle reconfiguration est alors appelée reconfiguration anticipée RA.

Le procédé est alors mis en oeuvre grâce à des règles de prédiction de débordement R4.

Ainsi, lorsqu'un élément ou un ensemble d éléments susceptible de générer un débordement est isolé, on procède alors à une reconfiguration partielle du second circuit FPGA 4, le moins chargé en termes de temps disponibles et en termes d'espaces. Une telle reconfiguration prédictive anticipe un événement de débordement et permet d'assurer la continuité de l'exécution en temps réel.

Selon une étape g), le procédé consiste à revenir à l'étape a) en cas d'invalidation de l'alerte à l'étape e).

Le procédé consiste par exemple à utiliser comme paramètre pertinent un paramètre de temps d'exécution des fonctions tests, selon les règles d'exécution R1.

Selon un exemple de mise en oeuvre, le procédé consiste à détecter un débordement temporel du temps d'exécution de tâches et reconfigurer l'architecture pour rétablir un temps d'exécution conforme aux règles d'exécution R1.

Lors d'une migration du modèle avionique M2, l'exécution du système de test se poursuit de façon dégradée, avec la suspension du second modèle avionique M2.

Avantageusement, le procédé consiste à suspendre la fonction avionique ou le modèle avionique M2 faisant l'objet d'une migration et à vérifier la disponibilité opérationnelle dudit modèle M2 dans son nouveau circuit de calcul FPGA 4, avant de mettre en oeuvre l'architecture reconfigurée. Une fois cette vérification effectuée, l'architecture cible est déclarée opérationnelle (ready to go) et le modèle avionique M2 est exécuté avec sa nouvelle localisation.

Avantageusement, le procédé conforme à l'invention est mis en oeuvre grâce à un logiciel de supervision chargé sur le premier calculateur CPU 1.

Alternativement, le procédé conforme à l'invention est mis en oeuvre grâce à un logiciel de supervision chargé sur plusieurs calculateurs CPU distincts, en l'occurrence sur les premier et second calculateurs 1 et 2.

Au-delà d'un certain nombre de calculateurs CPU et de circuits de calculs FPGA, il devient difficile de surveiller les paramètres en temps réel, notamment à cause des délais de communication entre les moyens mettant en oeuvre le procédé et les autres composants de l'architecture. Par ailleurs, le temps nécessaire à la prise de décision augmente avec l'augmentation du nombre de noeuds calculateurs CPU/circuits de calcul FPGA, pénalisant ainsi l'exécution des modèles avioniques.

Le dysfonctionnement du processus de supervision ou une anomalie sur la machine hôte correspondante peut provoquer l'arrêt du système complet. L'utilisation d'un environnement de supervision distribué est donc particulièrement intéressante. La répartition de la prise de décision sur différents calculateurs CPU permet un meilleur équilibrage de la charge (load-balancing) induite par l'exécution de l'algorithme de supervision.

Avantageusement, les échanges d'informations relatives aux débordements ou aux débordements anticipés ainsi qu'aux ressources matérielles disponibles sur chaque noeud de communication, se basent sur des protocoles standards de communication.

Naturellement, la présente invention est sujette à de nombreuses variations quant à sa mise en oeuvre. Bien que plusieurs modes de réalisations aient été décrits, on comprend bien qu'il n'est pas concevable d'identifier de manière exhaustive tous les modes possibles. Il est bien sûr envisageable de remplacer un moyen décrit ou une étape décrite par un moyen équivalent ou une étape équivalente sans sortir du cadre de l'invention.

## Revendications

1. Procédé de contrôle et de configuration d'une architecture d'un système avionique comportant au moins un calculateur CPU (1,2) et au moins un circuit de calcul FPGA (3,4) hébergeant des fonctions avioniques ou modèles avioniques et communiquant via un Bus numérique (6), ledit procédé étant dédié à optimiser l'exécution des traitements de fonctions tests, notamment sur bancs de tests,
**caractérisé en ce qu'**il consiste à reconfigurer, si nécessaire, ladite architecture selon les étapes suivantes :
- a)utiliser un ensemble de règles d'exécution (R1) pour les processus exécutés sur le (les) circuit(s) de calcul FPGA (3,4) et sur le(s) calculateur(s) CPU (1,2),
- b) surveiller des paramètres pertinents sur l'état général du système avionique en fonction des règles d'exécution (R1),
- c) générer une alerte lorsqu'un paramètre n'est pas conforme aux règles d'exécution (R1),
- d)vérifier l'alerte générée,
- e) valider ou invalider l'alerte ainsi générée et vérifiée,
- f) reconfigurer de manière dynamique et automatique l'architecture du système avionique en cas de validation de l'alerte, ladite reconfiguration consistant à faire migrer au moins une fonction avionique ou modèle avionique (M2) d'un calculateur CPU (1,2) ou circuit de calcul FPGA (3,4) vers un autre calculateur CPU (1,2) ou autre circuit de calcul FPGA (3,4),
- g) ou revenir à l'étape a) en cas d'invalidation de l'alerte.

2. Procédé de contrôle et de configuration selon la revendication 1,
**caractérisé en ce qu'**il consiste à utiliser comme paramètre pertinent un paramètre de temps d'exécution des fonctions tests selon les règles d'exécution (R1).

3. Procédé de contrôle et de configuration selon la revendication 2,
**caractérisé en ce qu'**il consiste à détecter un débordement temporel du temps d'exécution et reconfigurer l'architecture pour rétablir un temps d'exécution conforme aux règles d'exécution (R1).

4. Procédé de contrôle et de configuration selon la revendication 2,
**caractérisé en ce qu'**il consiste à détecter de manière anticipée un débordement temporel anticipé (DA) du temps d'exécution et reconfigurer l'architecture de manière anticipée pour rétablir un temps d'exécution conforme aux règles d'exécution (R1).

5. Procédé selon l'une quelconque des revendications 1 à 4,
**caractérisé en ce qu'**il consiste à suspendre la fonction avionique ou le modèle avionique (M2) faisant l'objet d'une migration et à vérifier la disponibilité opérationnelle de la fonction avionique ou de modèle avionique (M2) dans son nouveau calculateur CPU (1,2) ou circuit de calcul FPGA (3,4) avant de mettre en oeuvre l'architecture reconfigurée.

6. Procédé de contrôle et de configuration selon l'une quelconque des revendications précédentes,
**caractérisé en ce qu'**il est mis en oeuvre sur une architecture de système avionique comportant deux calculateurs CPU (1,2) et deux circuits de calcul FPGA (3,4).

7. Procédé de contrôle et de configuration selon l'une quelconque des revendications précédentes,
**caractérisé en ce qu'**il est mis en oeuvre grâce à un logiciel de supervision chargé sur un calculateur CPU (1,2).

8. Procédé de contrôle et de configuration selon l'une quelconque des revendications 1 à 6,
**caractérisé en ce qu'**il est mis en oeuvre grâce à un logiciel de supervision chargé sur plusieurs calculateurs CPU (1,2) distincts.

## Patentansprüche

1. Verfahren zur Steuerung und Konfiguration einer Avioniksystemarchitektur mit mindestens einem CPU-Rechner (1, 2) und mindestens einer Berechnungsschaltung FPGA (3, 4), in denen Avionikfunktionen oder Avionikmodelle gespeichert sind und die über einen digitalen Bus kommunizieren, wobei das Verfahren dazu bestimmt ist, Verarbeitungen von Testfunktionen auszuführen, insbesondere auf Prüfständen,
**dadurch gekennzeichnet, dass** das Verfahren daraus besteht, falls notwendig, die Architektur gemäß den folgenden Schritten zu rekonfigurieren:
- a) Verwenden einer Gruppe von Ausführungsregeln (R1), für die auf der (den) Berechnungsschaltung(en) FPGA (3, 4) und auf dem (den) CPU-Rechner(n) (1, 2) ausgeführten Prozesse,
- b) Überwachen von relevanten Parametern bezüglich des allgemeinen Zustands des Avioniksystems in Abhängigkeit von den Ausführungsregeln (R1),
- c) Erzeugen eines Alarms, wenn ein Parameter nicht mit den Ausführungsregeln (R1) übereinstimmt,
- d) Überprüfen des erzeugten Alarms,
- e) Bestätigen oder Ungültig-Erklären des so erzeugten und überprüften Alarms,
- f) dynamisches oder automatisches Rekonfigurieren der Architektur des Avioniksystems, wenn der Alarm bestätigt ist, wobei die Rekonfiguration darin besteht, mindestens eine Avionikfunktion oder ein Avionikmodell (M2) von einem CPU-Rechner (1, 2) oder einer Berechnungsschaltung FPGA (3, 4) auf einen anderen CPU-Rechner (1, 2) oder eine andere Berechnungsschaltung FPGA (3, 4) zu verlagern,
- g) oder Zurückgehen zu Schritt a) im Falle einer Ungültig-Erklärung des Alarms.

2. Verfahren zur Steuerung und Konfiguration nach Anspruch 1,
**dadurch gekennzeichnet, dass** als relevanter Parameter ein Parameter der Ausführungszeit von Testfunktionen gemäß den Ausführungsregeln (R1) verwendet wird.

3. Verfahren zur Steuerung und Konfiguration nach Anspruch 2,
**dadurch gekennzeichnet, dass** ein zeitweises Überschreiten der Ausführungszeit erfasst wird, und die Architektur rekonfiguriert wird, um eine Ausführungszeit wiederherzustellen, die mit den Ausführungsregeln (R1) übereinstimmt.

4. Verfahren zur Steuerung und Konfiguration nach Anspruch 2,
**dadurch gekennzeichnet, dass** im Voraus ein zeitweises vorausgesehenes Überschreiten der Ausführungszeit erfasst wird und die Architektur im Voraus rekonfiguriert wird, um eine Ausführungszeit, die mit den Ausführungsregeln (R1) übereinstimmt, wiederherzustellen.

5. Verfahren nach einem der Ansprüche 1 bis 4,
**dadurch gekennzeichnet, dass** die Avionikfunktion oder das Avionikmodell (M2), die verlagert werden, aufgehoben werden, und die operationelle Verfügbarkeit der Avionikfunktion oder des Avionikmodells (M2) in deren neuem CPU-Rechner (1, 2) oder in der Berechnungsschaltung FPGA (3, 4) überprüft werden, bevor die rekonfigurierte Architektur ausgeführt wird.

6. Verfahren zur Steuerung und Konfiguration nach einem der vorstehenden Ansprüche,
**dadurch gekennzeichnet, dass** es auf einer Architektur eines Avioniksystems ausgeführt wird, welches zwei CPU-Rechner (1, 2) und zwei Berechnungsschaltungen FPGA (3, 4) aufweist.

7. Verfahren zur Steuerung und Konfiguration nach einem der vorstehenden Ansprüche,
**dadurch gekennzeichnet, dass** es mit Hilfe eines Überwachungsprogramms durchgeführt wird, das auf einen CPU-Rechner (1, 2) geladen ist.

8. Verfahren zur Steuerung und Konfiguration nach einem der Ansprüche 1 bis 6,
**dadurch gekennzeichnet, dass** es mit einem Überwachungsprogramm ausgeführt wird, das auf mehrere verschiedene CPU-Rechnern (1, 2) geladen ist.

## Claims

1. A method of controlling and configuring an architecture of an avionics system comprising at least one CPU computer (1, 2) and at least one FPGA calculation circuit (3, 4) hosting avionics functions or avionics models and communicating via a digital bus (6), said method being dedicated to optimising the execution of the processing of test functions, in particular on test benches,
**characterised in that** it consists of, if necessary, reconfiguring said architecture in accordance with the following steps:
- a) using a set of execution rules (R1) for the processes executed on the FPGA calculation circuit(s) (3, 4) and the CPU computer(s) (1, 2),
- b) monitoring pertinent parameters relating to the general state of the avionics system as a function of the execution rules (R1),
- c) generating an alert when a parameter does not comply with the execution rules (R1),
- d) verifying the alert generated,
- e) validating or invalidating the alert thus generated and verified,
- f) dynamically and automatically reconfiguring the architecture of the avionics system in the event of the alert being validated, said reconfiguration consisting of causing at least one avionics function or avionics model (M2) to migrate from a CPU computer (1, 2) or FPGA calculation circuit (3, 4) to another CPU computer (1, 2) or another FPGA calculation circuit (3, 4),
- g) or reverting to step a) in the event of the alert being invalidated.

2. A control and configuration method according to Claim 1,
**characterised in that** it consists of using as pertinent parameter a parameter of execution time of the test functions in accordance with the execution rules (R1).

3. A control and configuration method according to Claim 2,
**characterised in that** it consists of detecting a time spillover of the execution time and reconfiguring the architecture in order to re-establish an execution time which complies with the execution rules (R1).

4. A control and configuration method according to Claim 2,
**characterised in that** it consists of detecting in an anticipated manner an anticipated time spillover (DA) of the execution time and reconfiguring the architecture in an anticipated manner in order to re-establish an execution time which complies with the execution rules (R1).

5. A method according to any one of Claims 1 to 4,
**characterised in that** it consists of suspending the avionics function or the avionics model (M2) which is the subject of a migration, and verifying the operational availability of the avionics function or avionics model (M2) in its new CPU computer (1, 2) or FPGA calculation circuit (3, 4) prior to implementing the reconfigured architecture.

6. A control and configuration method according to any one of the preceding claims,
**characterised in that** it is implemented on an avionics system architecture comprising two CPU computers (1, 2) and two FPGA calculation circuits (3, 4).

7. A control and configuration method according to any one of the preceding claims,
**characterised in that** it is implemented by supervision software loaded onto a CPU computer (1, 2).

8. A control and configuration method according to any one of Claims 1 to 6,
**characterised in that** it is implemented by supervision software loaded onto a plurality of separate CPU computers (1, 2).
